# EUROPEAN PATENT SPECIFICATION

(11) **EP 3 093 482 B1**
(45) Date of publication and mention of the grant of the patent: **01.08.2018**
(21) Application number: 14854298.8
(22) Date of filing: 02.10.2014
(51) Int. Cl.: F02M 26/01, B01D 53/94, F01N 3/02, F01N 3/023, F02D 21/08

(54) **EXHAUST GAS PURIFICATION SYSTEM OF INTERNAL COMBUSTION ENGINE AND EXHAUST GAS PURIFICATION METHOD OF INTERNAL COMBUSTION ENGINE**
ABGASREINIGUNGSSYSTEM FÜR EINEN VERBRENNUNGSMOTOR UND ABGASREINIGUNGSVERFAHREN FÜR EINEN VERBRENNUNGSMOTOR
SYSTÈME DE PURIFICATION DE GAZ D'ÉCHAPPEMENT DE MOTEUR À COMBUSTION INTERNE ET PROCÉDÉ DE PURIFICATION DE GAZ D'ÉCHAPPEMENT DE MOTEUR À COMBUSTION INTERNE

(30) Priority: 17.10.2013 JP 2013216233
(43) Date of publication of application: 16.11.2016
(73) Proprietor: Isuzu Motors, Ltd., Shinagawa-Ku Tokyo 140-8722 (JP)
(72) Inventor: NAGAOKA, Daiji, Fujisawa-shi Kanagawa 252-0881 (JP); SAKAMOTO, Takayuki, Fujisawa-shi Kanagawa 252-0881 (JP)
(74) Representative: WSL Patentanwälte Partnerschaft mbB
(86) International application number: PCT/JP2014/076404
(87) International publication number: WO 2015/056575

(56) References cited:
- EP-A1- 2 410 144
- EP-A2- 1 990 511
- JP-A- 2002 021 623
- JP-A- 2010 071 135
- JP-A- 2010 112 290
- JP-A- 2011 153 591
- US-A1- 2011 270 511

## Description

### TECHNICAL FIELD

The present invention relates to an exhaust gas purification system of an internal combustion engine and an exhaust gas purification method of the internal combustion engine which can suppress NO₂ emission to the atmosphere in a temperature region in which an NO₂ generation amount by an oxidation catalyst included in an exhaust gas after-treatment device provided in an exhaust passage is increased in an idling operation state after travel of a vehicle.

### BACKGROUND ART

Generally, a vehicle travels by transmitting power generated by burning fuel in an internal combustion engine to wheels through a transmission etc. However, since NOx (nitrogen oxide), PM (Particulate Matter), etc. are contained in exhaust gas generated by the combustion, an exhaust gas after-treatment device is provided in an exhaust passage of the internal combustion engine, a catalyst device is carried by the after-treatment device, and purification treatment of NOx, PM, etc. contained in the exhaust gas is performed by the catalyst device.

As the catalyst device, for example, an LNT (Lean NOx Trap), an SCR (Selective Catalytic Reduction), or a DPF (Diesel Particulate Filter) is used. The purification-treated exhaust gas is discharged into the atmosphere via a muffler etc.

For example, as described in Japanese patent application Kokai publication No. 2007-255345, although the DPF is used for collecting and purifying PM in exhaust gas by a filter, it is necessary to burn and remove the PM before reaching a collection limit amount in order to prevent clogging of the filter. When a temperature of the exhaust gas is high, such as 500°C or higher, PM burns spontaneously. Meanwhile, when the temperature of the exhaust gas is low, unburned HC of fuel, etc. are supplied into the exhaust gas, the unburned HC is burned by an oxidation catalyst (DOC) arranged at a preceding stage of the DPF, etc., and a temperature of the exhaust gas that flows into the DPF is raised to approximately 600°C utilizing oxidation reaction heat of the combustion, whereby PM is forcibly burned.

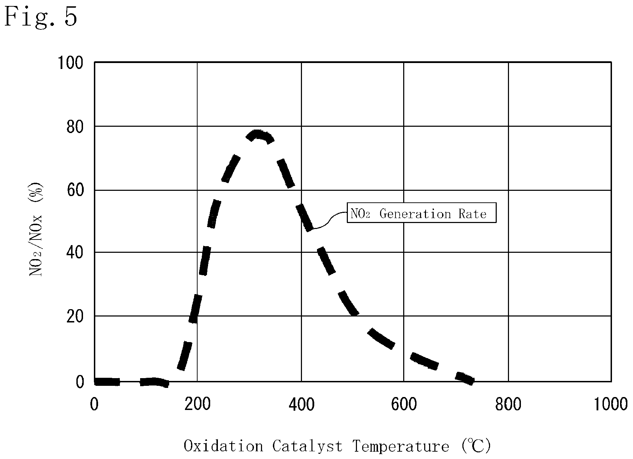

Here, NO contained in the exhaust gas is oxidized to NO₂ by an oxidation reaction function of the oxidation catalyst. Due to the NO->NO₂ activity and an NO/NO₂ equilibrium state of NOx contained in the exhaust gas, an NO₂ generation amount by the oxidation catalyst is increased in a particular temperature region as shown in Fig. 5 (hereinafter, the temperature region is referred to as an "oxidation catalyst activation temperature region"). Generally, the oxidation catalyst activation temperature region is approximately 200 to 500°C.

In a case where a temperature of the oxidation catalyst falls within a temperature region higher than the oxidation catalyst activation temperature region, a ratio of NO₂ is lowered by the NO/NO₂ equilibrium state in the exhaust gas. In addition, in a case where the temperature of the oxidation catalyst falls within a temperature region lower than the oxidation catalyst activation temperature region, the NO->NO₂ activity of the oxidation catalyst is lowered, and the ratio of NO₂ in NOx is lowered.

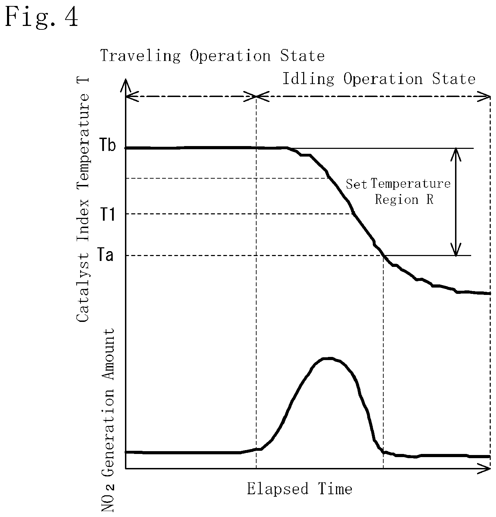

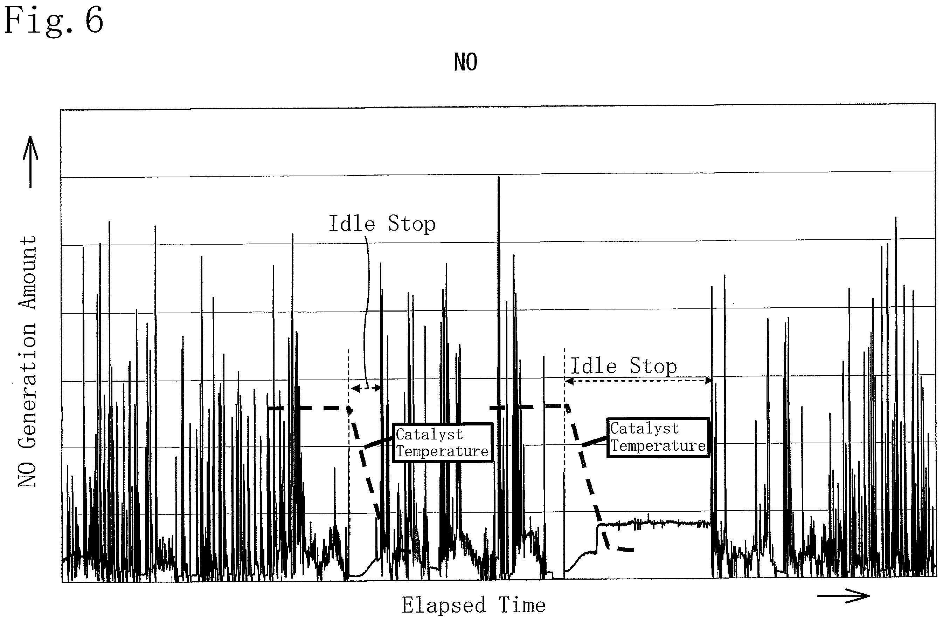

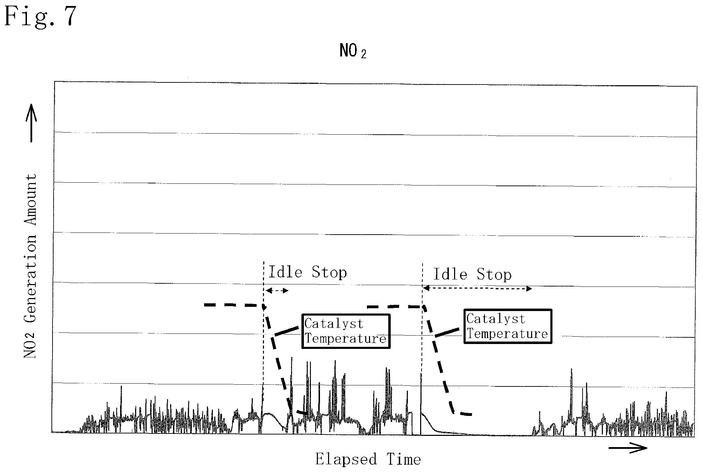

Additionally, accordingly, in a case where a vehicle is stopped in an idling operation state in a service area etc. after traveling on an expressway, the temperature of the oxidation catalyst often falls within the oxidation catalyst activation temperature region since the vehicle has just been stopped, a generation amount of NO₂ by the oxidation catalyst is large, and thus NO₂ may be possibly emitted to the atmosphere without being completely consumed (refer to Figs. 4, 6, and 7) .

### PRIOR ART DOCUMENT

### PATENT DOCUMENT

Patent Document 1: Japanese patent application Kokai publication No. 2007-255345
Patent Document 2: US2011270511

### SUMMARY OF THE INVENTION

### PROBLEM TO BE SOLVED BY THE INVENTION

The present invention is to provide an exhaust gas purification system of an internal combustion engine and an exhaust gas purification method of the internal combustion engine which can decrease generation of NO₂ by an oxidation catalyst included in an exhaust gas after-treatment device provided in an exhaust passage, and can suppress emission of NO₂ to the atmosphere, in an idling operation state after travel of a vehicle.

### MEANS FOR SOLVING THE PROBLEMS

An exhaust gas purification system of an internal combustion engine of the present invention for achieving the above-described object is an exhaust gas purification system in which an exhaust gas after-treatment device including an oxidation catalyst and a DPF in order from an upstream side is provided in an exhaust passage of the internal combustion engine including an EGR system, in which a control device that controls the EGR system is configured to set a target value of an EGR rate in EGR control to be a second EGR rate higher than a first EGR rate at the time of a normal operation of the internal combustion engine and perform the EGR control, in a case where a catalyst index temperature that indexes a temperature of the oxidation catalyst falls within a set temperature region between a lower limit set temperature and an upper limit set temperature which are preliminarily set in relation to an oxidation catalyst activation temperature, and where an estimated PM deposition amount of the DPF is less than a preliminarily set regeneration start threshold value, after an operation state of the internal combustion engine transitions from a traveling operation state to an idling operation state.

Here, in a case of using a measurement temperature of the oxidation catalyst as the catalyst index temperature, since generally, an oxidation catalyst activation temperature region in which an NO₂ generation amount by the oxidation catalyst is increased is approximately 200 to 500°C, the lower limit set temperature with respect to the catalyst index temperature is set to be approximately 200°C in the temperature region, and the upper limit set temperature is set to be approximately 500°C in the temperature region. Note that since it is generally difficult to directly measure a catalyst temperature, an exhaust gas temperature is often used as the catalyst index temperature instead of the catalyst temperature. However, in this case, in consideration of a measurement position of the exhaust gas temperature, in a case where the exhaust gas temperature (the catalyst index temperature) falls within the set temperature region, the lower limit set temperature and the upper limit set temperature are set by temperatures of the exhaust gas at which the temperature of the catalyst falls within the oxidation catalyst activation temperature region.

According to this configuration, in the idling operation state after travel of a vehicle having the internal combustion engine mounted therein, in a case where the catalyst temperature of the oxidation catalyst falls within the oxidation catalyst activation temperature region in which an NO₂ generation amount is increased, regeneration treatment of the DPF need not be performed, and where a probability that an outflow of NO₂ into the atmosphere becomes high, an amount of NOx generated in a cylinder can be decreased by operation with the second EGR rate higher than the first EGR rate of a normal operation state, and thus the generation amount of NO₂ in the oxidation catalyst can be suppressed to prevent emission of NO₂ to the atmosphere. In addition, according to this configuration, since it is unnecessary to separately install a NOx reduction catalyst (a deNOx catalyst) etc., cost can be suppressed. It is preferable to set the first EGR rate to be 20 to 30%, and to set the second EGR rate to be 30 to 50%.

Note that although amounts of HC and CO contained in the exhaust gas emitted from the cylinder are increased by setting high the target value of the EGR rate, the temperature of the oxidation catalyst falls within the oxidation catalyst activation temperature region, and falls within the temperature region in which purification treatment of HC and CO can be performed, and thus emission of HC and CO into the atmosphere can be suppressed.

In addition, in the above-described exhaust gas purification system of the internal combustion engine, the control device that controls the EGR system is configured to: perform regeneration control of the DPF in a state where the target value of the EGR rate in the EGR control remains to be the first EGR rate or in a state where it is lower than the first EGR rate, in a case where the catalyst index temperature that indexes the temperature of the oxidation catalyst is not less than a preliminarily set first set temperature, and the estimated PM deposition amount of the DPF is not less than the regeneration start threshold value, after the operation state of the internal combustion engine transitions from the traveling operation state to the idling operation state; and after that, set the target value of the EGR rate in the EGR control to be higher than the first EGR rate and perform regeneration control of the DPF, in a case where the catalyst index temperature becomes lower than the preliminarily set first set temperature.

Here, the first set temperature is set to a temperature region in which regeneration treatment of the DPF can be performed when NO₂ is utilized. Generally, combustion of PM deposited on the DPF is not started unless a temperature of the DPF is not less than 500 to 600°C. However when NO₂ is utilized for regeneration treatment of the DPF since NO₂ has a PM oxidation capacity, combustion of PM can be started by generated heat due to an oxidation reduction reaction of NO₂ and PM (NO₂ is reduced, and PM is oxidized) even if the temperature of the DPF is not less than approximately 280°C. Therefore, the first set temperature is, for example, set to be 300°C.

With such a configuration, in the idling operation state after travel of the vehicle, in the case where the catalyst temperature of the oxidation catalyst falls within the oxidation catalyst activation temperature region, and where regeneration treatment of the DPF needs to be performed, NOx emission can be maintained or increased, the NO₂ generation amount by the oxidation catalyst can be maintained or increased, PM deposited on the DPF can be burned and reduced by utilizing the NO₂ for regeneration treatment of the DPF of a downstream side (a subsequent stage), and NO₂ can also be reduced by reduction of NO₂.

In addition, in the case where the catalyst index temperature becomes lower than the first set temperature, the amount of NOx generated in the cylinder can be decreased to suppress the generation amount of NO₂ by the oxidation catalyst by controlling the target value of the EGR rate to be the second EGR rate, and thus emission of NO₂ to the atmosphere can be suppressed.

In addition, in the above-described exhaust gas purification system of the internal combustion engine, when the control device is configured to perform control to return the target value of the EGR rate in the EGR control to the first EGR rate, in the case where the catalyst index temperature that indexes the temperature of the oxidation catalyst becomes lower than the lower limit set temperature, after the operation state of the internal combustion engine transitions from the traveling operation state to the idling operation state, the following effects can be exerted.

According to this configuration, in the case where the catalyst index temperature becomes lower than the lower limit set temperature after transition from the traveling operation state to the idling operation state, EGR control is performed with the first EGR rate of the normal operation as a target, whereby an amount of EGR gas in the cylinder is returned to an amount of the normal operation, increase in generation amounts of HC and CO in the cylinder can be suppressed, and deterioration of HC and CO can be prevented.

In addition, in the above-described exhaust gas purification system of the internal combustion engine, in a case where a three-way catalyst is used for the oxidation catalyst, when the control device is configured to perform control to set the second EGR rate to be a value at which an air-fuel ratio state of the exhaust gas becomes a stoichiometric state at the time of performing control so that the target value of the EGR rate in the EGR control becomes the second EGR rate, purification performance to NOx, HC, and CO can be enhanced by a three-way function of the three-way catalyst by setting an air-fuel ratio of the exhaust gas to be the stoichiometric state, and thus simultaneous reduction of NOx, HC, and CO can be achieved.

In addition, an exhaust gas purification method of an internal combustion engine of the present invention for achieving the above-described object is the exhaust gas purification method for purifying exhaust gas by an exhaust gas after-treatment device that is provided in an exhaust passage of the internal combustion engine including an EGR system, and includes an oxidation catalyst and a DPF in order from an upstream side, the method including the step of setting a target value of an EGR rate in EGR control to be a second EGR rate higher than a first EGR rate at the time of a normal operation of the internal combustion engine and performing the EGR control, in a case where a catalyst index temperature that indexes a temperature of the oxidation catalyst falls within a set temperature region between a lower limit set temperature and an upper limit set temperature which are preliminarily set in relation to an oxidation catalyst activation temperature, and where an estimated PM deposition amount of the DPF is less than a preliminarily set regeneration start threshold value, after an operation state of the internal combustion engine transitions from a traveling operation state to an idling operation state.

In addition, in the above-described exhaust gas purification method of the internal combustion engine, the method further includes the steps of: performing regeneration control of the DPF in a state where the target value of the EGR rate in the EGR control remains to be the first EGR rate or in a state where it is lower than the first EGR rate, in a case where the catalyst index temperature that indexes the temperature of the oxidation catalyst is not less than a preliminarily set first set temperature, and the estimated PM deposition amount of the DPF is not less than the regeneration start threshold value, after the operation state of the internal combustion engine transitions from the traveling operation state to the idling operation state; and after that, setting the target value of the EGR rate in the EGR control to be higher than the first EGR rate and performing regeneration control of the DPF, in a case where the catalyst index temperature becomes lower than the preliminarily set first set temperature.

In addition, in the above-described exhaust gas purification method of the internal combustion engine, the method further includes the step of performing control to return the target value of the EGR rate in the EGR control to the first EGR rate, in a case where the catalyst index temperature that indexes the temperature of the oxidation catalyst becomes lower than the lower limit set temperature, after the operation state of the internal combustion engine transitions from the traveling operation state to the idling operation state.

Further, in the above-described exhaust gas purification method of the internal combustion engine, the method further includes the step of performing control to set the second EGR rate to be a value at which an air-fuel ratio state of exhaust gas becomes a stoichiometric state, when controlling the target value of the EGR rate in the EGR control to be the second EGR rate, in a case where a three-way catalyst is used for the oxidation catalyst.

According to these methods, it is possible to exert effects similar to those of the above-described exhaust gas purification system of the internal combustion engine, respectively.

### EFFECT OF THE INVENTION

According to the exhaust gas purification system of the internal combustion engine and the exhaust gas purification method of the internal combustion engine of the present invention, in the idling operation state after travel of the vehicle, in the case where the catalyst temperature of the oxidation catalyst falls within the oxidation catalyst activation temperature region, and regeneration treatment of the DPF need not be performed, and where a probability that an outflow of NO₂ into the atmosphere becomes high, the amount of NOx generated in the cylinder can be decreased by operation with the second EGR rate higher than the first EGR rate of the normal operation state, and thus the generation amount of NO₂ in the oxidation catalyst can be suppressed to prevent emission of NO₂ to the atmosphere. In addition, according to this configuration, since it is unnecessary to separately install a NOx reduction catalyst (a deNOx catalyst) etc., cost can be suppressed.

Accordingly, in the idling operation state after travel of the vehicle, generation of NO₂ by the oxidation catalyst included in the exhaust gas after-treatment device provided in the exhaust passage can be decreased, and emission of NO₂ to the atmosphere can be suppressed.

That is, simultaneous reduction of PM and NO₂ is promoted utilizing combustion of PM by NO₂ by performing EGR control to change the EGR rate using the catalyst temperature and the estimated PM collection amount as a determination criterion, and under the other conditions, emission of NOx at an engine outlet can be suppressed to thereby suppress generation of NO₂ by the oxidation catalyst.

In addition, in a case where a PM amount enough to consume NO₂ is not collected by the DPF, and in a case where the catalyst temperature is low and is unsuitable for PM combustion, a PM combustion effect by NO₂ cannot be expected, and thus emission of NOx at the engine outlet can be suppressed to thereby suppress generation of NO₂ by the oxidation catalyst.

### BRIEF DESCRIPTION OF THE DRAWINGS

[Fig. 1] Fig. 1 is a diagram showing a configuration of an exhaust gas purification system of an internal combustion engine of an embodiment according to the present invention.
[Fig. 2] Fig. 2 is a flow chart showing one example of a control flow of an exhaust gas purification method of the internal combustion engine of the embodiment according to the present invention.
[Fig. 3] Fig. 3 is a graph showing a time series of a catalyst index temperature, an NO₂ generation amount, an estimated PM deposition amount, and an EGR rate, when an operation state transitions from a traveling operation state to an idling operation state, in a practical example of the present invention.
[Fig. 4] Fig. 4 is a graph showing a time series of a catalyst index temperature and an NO₂ generation amount in a conventional example, when an operation state transitions from a traveling operation state to an idling operation state, in a conventional technology.
[Fig. 5] Fig. 5 is a graph showing a generation rate of NO₂ of an oxidation catalyst.
[Fig. 6] Fig. 6 is a graph showing transition of an NO generation amount of the oxidation catalyst in the traveling operation state and the idling operation state.
[Fig. 7] Fig. 7 is a graph showing transition of an NO₂ generation amount of the oxidation catalyst in the traveling operation state and the idling operation state.

### MODES FOR CARRYING OUT THE INVENTION

Hereinafter, an exhaust gas purification system of an internal combustion engine and an exhaust gas purification method of the internal combustion engine of an embodiment according to the present invention will be explained with reference to drawings.

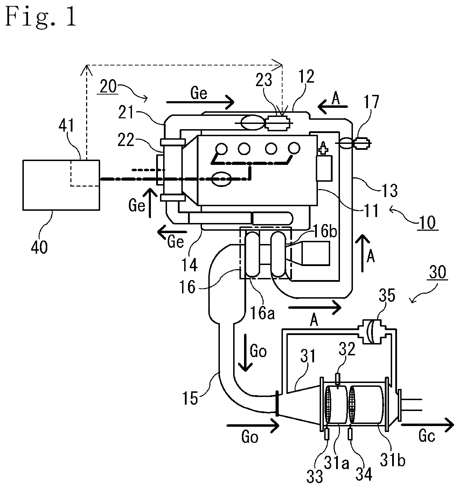

As shown in Fig. 1, an exhaust gas purification system 30 of the internal combustion engine of the embodiment according to the present invention is included in an engine (an internal combustion engine) 10, and the engine 10 includes: an engine body 11; an intake passage 13; and an exhaust passage 15.

A compressor 16b of a turbocharger (a turbo-type supercharger) 16 and an intake throttle valve 17 are provided in the intake passage 13 connected to an intake manifold 12 of the engine body 11 in order from an upstream side. In addition, a turbine 16a of the turbocharger 16 is provided in the exhaust passage 15 connected to an exhaust manifold 14 of the engine body 11.

In addition, an EGR passage 21 that connects the intake manifold 12 and the exhaust manifold 14 is provided, and an EGR cooler 22 and an EGR valve 23 are provided in the EGR passage 21 in order from the upstream side. The EGR passage 21, the EGR cooler 22, the EGR valve 23, and a control device 41 that controls the EGR valve constitute an EGR system 20.

Additionally, the exhaust gas purification system 30 is configured to have an exhaust gas after-treatment device 31 provided in the exhaust passage 15 in order to perform purification treatment of NOx (nitrogen oxide), PM (Particulate Matter), etc. that are contained in an exhaust gas G generated in the engine 10. An oxidation catalyst (DOC) 31a and a DPF 31b are provided in the exhaust gas after-treatment device 31 in order from the upstream side, and further, an exhaust gas purification device that carries a lean NOx reduction catalyst (LNT), a selective reduction type catalyst (an SCR catalyst), etc. is provided as needed.

When a flow of intake and exhaust of the engine 10, the EGR system 20, and the exhaust gas purification system 30 is explained, a fresh air A introduced from the atmosphere to the intake passage 13 is sent to the intake manifold 12 via the compressor 16b and the intake throttle valve 17 together with an EGR gas Ge that flows into the intake passage 13 from the EGR passage 21 as needed, is mixed and compressed with fuel injected in a cylinder, and the fuel burns to generate power.

Additionally, the exhaust gas G generated by combustion flows out to the exhaust passage 15, a part of the exhaust gas G flows through the EGR passage 21 as the EGR gas Ge, a remaining exhaust gas Go (=G-Ge) passes through the turbine 16a and is purified by the exhaust gas after-treatment device 31, and subsequently, it is discharged into the atmosphere via a muffler etc. as an exhaust gas Gc.

In addition, the control device 41 that controls the EGR system 20 is provided. The control device 41 is usually configured to be incorporated in a whole system control device 40 that performs control of the whole engine 10 and control of a whole vehicle having the engine 10 mounted therein.

Additionally, the control device 41 that controls the EGR system 20 is configured as follows in the present invention. That is, the control device 41 is configured to set a target value Et of an EGR rate E in the EGR control to be a second EGR rate E2 higher than a first EGR rate E1 at the time of a normal operation of the engine 10 and perform the EGR control, in a case where a catalyst index temperature T that indexes a temperature of the oxidation catalyst 31a falls within a set temperature region R between a lower limit set temperature Ta and an upper limit set temperature Tb which are preliminarily set in relation to an oxidation catalyst activation temperature Tca, and where an estimated PM deposition amount V of the DPF 31b is less than a preliminarily set regeneration start threshold value Vc, after an operation state of the engine 10 transitions from a traveling operation state to an idling operation state. The first EGR rate E1 and the second EGR rate E2 are calculated with reference to an EGR control map based on the operation state of the engine 10, for example, an engine speed Ne and a load Qn.

Here, it can be determined whether or not the operation state of the engine 10 has transitioned from the traveling operation state to the idling operation state, based on a depression amount of an accelerator pedal (not shown), a position of a brake, a position of a shift lever of a transmission, the engine speed Ne, a load Q (a fuel injection amount q), etc.

As for determination of the catalyst index temperature T, as shown in Fig. 1, a temperature of a portion that carries the catalyst is directly detected as the catalyst index temperature T by a temperature sensor 32 disposed in the oxidation catalyst 31a, and a measurement temperature Tm (in this case, a catalyst temperature Tc = Tm) of the oxidation catalyst 31a can be used. In this case, since generally, an oxidation catalyst activation temperature region Ra in which an NO₂ generation amount by the oxidation catalyst 31a is increased ranges approximately from 200 to 500°C, the lower limit set temperature Ta with respect to the catalyst index temperature T is set to be approximately 200°C in the temperature region Ra, and the upper limit set temperature Tb is set to be approximately 500°C in the temperature region Ra. That is, the set temperature region R is equal to the oxidation catalyst activation temperature region Ra.

Note that since usually, it is generally difficult to directly measure the catalyst temperature Tc, a temperature of the exhaust gas Go detected by a temperature sensor 33 disposed in the after-treatment device 31 on the upstream side of the oxidation catalyst 31a, or a temperature of the exhaust gas Go detected by a temperature sensor 34 disposed in the exhaust gas after-treatment device 31 on the downstream side of the oxidation catalyst 31a are often used as the catalyst index temperature T instead of the catalyst temperature Tc. In this case, in consideration of a measurement position of an exhaust gas temperature Tg, in a case where the exhaust gas temperature Tg serving as the catalyst index temperature T falls within a set temperature region Rb, the lower limit set temperature Ta and the upper limit set temperature Tb are set by the exhaust gas temperature Tg at which the catalyst temperature Tc falls within the oxidation catalyst activation temperature region Ra. Accordingly, the set temperature region R is not necessarily equal to the oxidation catalyst activation temperature region Ra.

In addition, as for determination of the estimated PM deposition amount V of the DPF 31b, as shown in Fig. 1, the estimated PM deposition amount V of the DPF 31b is calculated from an estimated PM deposition amount calculation map previously incorporated in the control device 41 based on a differential pressure ΔP detected by a differential pressure sensor 35 that measures a differential pressure between an inlet and an outlet of the exhaust gas after-treatment device 31, or is calculated by accumulating a PM deposition amount ΔV for each time calculated from the operation state of the engine 10. Additionally, the regeneration start threshold value Vc is previously set by an experiment etc., and is previously incorporated in the control device 41.

In addition, as for the first EGR rate E1 and the second EGR rate E2, values previously calculated by an experiment etc. are incorporated in the control device 41. The EGR rate (a ratio of exhaust gas to an intake air amount) E is set to be the one at which NOx emission at the outlet of the engine 10 becomes a value as low as possible, for example, not more than 20 ppm. The first EGR rate E1 in the normal operation is 20 to 30%, and the second EGR rate E2 thereof is 30 to 50% higher than the first EGR rate E1.

In addition, the control device 41 is configured to perform regeneration control of the DPF 31b in a state where the target value Et of the EGR rate E in the EGR control remains to be the first EGR rate E1 or in a state where it is lower than the first EGR rate E1, in a case where the catalyst index temperature T that indexes the temperature of the oxidation catalyst 31a is not less than a preliminarily set first set temperature T1, and where the estimated PM deposition amount V of the DPF 31b is not less than the regeneration start threshold value Vc, after the operation state of the engine 10 transitions from the traveling operation state to the idling operation state, and after that, set the target value Et of the EGR rate E in the EGR control to be higher than the first EGR rate E1 and perform regeneration control of the DPF 31b, in a case where the catalyst index temperature T becomes lower than the preliminarily set first set temperature T1.

Here, the first set temperature T1 is set in connection with a regeneration treatable temperature of the DPF 31b at the time of utilizing NO₂. Generally, combustion of PM deposited on the DPF 31b is not started unless a temperature of the DPF 31b is not less than 500 to 600°C. However, when NO₂ is utilized for regeneration treatment of the DPF 31b, combustion of PM can be started by an oxidation reduction reaction of NO₂ and PM even if the temperature of the DPF 31b is approximately not less than 280°C, and thus the first set temperature T1 is, for example, set to be 300°C.

Further, the control device 41 is configured to perform control to return the target value Et of the EGR rate E in the EGR control to the first EGR rate E1, in a case where the catalyst index temperature T that indexes the temperature of the oxidation catalyst 31a becomes lower than the lower limit set temperature Ta, after the operation state of the engine 10 transitions from the traveling operation state to the idling operation state.

Note that in a case of using a three-way catalyst for the oxidation catalyst 31a, when the target value Et of the EGR rate E in the EGR control is controlled to be the second EGR rate E2, the control device 41 is configured to perform control to set the second EGR rate E2 to be a value at which an air-fuel ratio state of the exhaust gas G becomes a stoichiometric state.

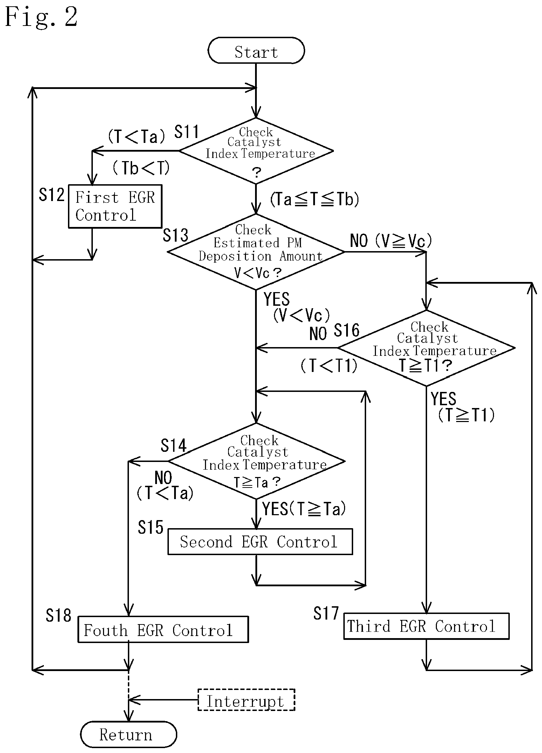

Next, an exhaust gas purification method of the internal combustion engine in the above-described exhaust gas purification system 30 of the internal combustion engine will be explained with reference to a control flow of Fig. 2. The control flow of Fig. 2 is shown as follows: when it is detected that the engine 10 has transitioned from the traveling operation state to the idling operation state, the control flow of Fig. 2 is called by an upper-class control flow, and thereby the control flow of Fig. 2 is started; when the EGR rate E of the EGR system 20 is controlled, the idling operation state is ended, and the engine 10 becomes the traveling operation state, or operation of the engine 10 is stopped, the process returns to the upper control flow by interrupt; and additionally, whenever the engine 10 transitions from the traveling operation state to the idling operation state, the control flow of Fig. 2 is called by the upper-class control flow, and the control flow of Fig.2 is repeatedly carried out during the idling operation state of the vehicle. The control flow of Fig. 2 is then ended along with the end of the upper-class control flow when the operation of the engine 10 is stopped.

When the control flow of Fig. 2 is first called by the upper-class control flow, and then the control flow of Fig. 2 is started, it is determined in step S11 whether or not the catalyst index temperature T that indexes the temperature of the oxidation catalyst 31a falls within the set temperature region R (Ta ≤ T ≤ Tb) between the lower limit set temperature Ta and the upper limit set temperature Tb which are preliminarily set in relation to the oxidation catalyst activation temperature Tca.

If in the determination of step S11, the catalyst index temperature T is lower than the lower limit set temperature Ta, or is higher than the upper limit set temperature Tb, the process proceeds to step S12. In the step S12, first EGR control is performed in which the target value Et of the EGR rate E is set to remain the first EGR rate E1 in the normal operation. The first EGR control is performed for a preliminarily set control time, and subsequently, the process returns to step S11.

In addition, if in the determination of step S11, the catalyst index temperature T is not less than the lower limit set temperature Ta and not more than the upper limit set temperature Tb, the process proceeds to step S13. In the step S13, it is determined whether or not the estimated PM deposition amount V of the DPF 31b is less than the preliminarily set regeneration start threshold value Vc. That is, the estimated PM collection amount V on the DPF 31b is always estimated and calculated during the operation of the engine 10, and it is determined whether or not a PM amount enough to consume NO₂ (for example, not less than approximately 1 g/L) at the time of idle stop after high-speed travel is collected.

If the estimated PM deposition amount V is less than the preliminarily set regeneration start threshold value Vc in the determination (YES), the process proceeds to step S14, and it is determined again whether or not the catalyst index temperature T is not less than the lower limit set temperature Ta. If the catalyst index temperature T is not less than the lower limit set temperature Ta (YES), i.e., when the condition is satisfied, for PM combustion, in step S15, second EGR control is performed in which the target value Et of the EGR rate E in the EGR control is set to be the second EGR rate E2 higher than the first EGR rate E1 at the time of the normal operation of the engine 10. The second EGR control is performed for a preliminarily set control time, and then, the process returns to step S14. If the catalyst index temperature T is lower than the lower limit set temperature Ta in the step S14 (NO), the process proceeds to step S18.

That is, an EGR amount is increased under particular conditions which are both of the condition that the operation of the engine 10 is at the time of idling stop and the condition that the catalyst index temperature T at which generation of NO₂ is increased falls within the oxidation catalyst activation temperature region Ra. The EGR amount is confirmed on a trial basis, and is set to be an amount (not more than 20 ppm) at which NOx emission at the engine outlet becomes a value as low as possible. The EGR rate at this time is usually 30 to 50%.

Thereby, since the catalyst temperature Tc of the oxidation catalyst 31a falls within the oxidation catalyst activation temperature region Ra in which an NO₂ generation amount is increased, and the estimated PM deposition amount V is less than the preliminarily set regeneration start threshold value Vc, regeneration treatment of the DPF 31b need not be performed. In addition, in a case where a probability that an outflow of NO₂ into the atmosphere becomes high, an amount of NOx generated in the cylinder can be decreased by operation with the second EGR rate E2 higher than the first EGR rate E1 in the normal operation state, and thus the generation amount of NO₂ in the oxidation catalyst 31a can be suppressed to prevent emission of NO₂ to the atmosphere.

Note that although amounts of HC and CO contained in the exhaust gas G emitted from the cylinder are increased by setting high the target value Et of the EGR rate E, the catalyst temperature Tc of the oxidation catalyst 31a falls within the oxidation catalyst activation temperature region Ra, and falls within the temperature region in which purification treatment of HC and CO can be performed, and thus emission of HC and CO into the atmosphere can be suppressed.

If in the determination of step S13, the estimated PM deposition amount V is not less than the regeneration start threshold value Vc (NO), the process proceeds to step S16, and it is determined whether or not the catalyst index temperature T is not less than the first set temperature T1. If in the determination of step S16, the catalyst index temperature T is not less than the first set temperature T1 (YES), the process proceeds to step S17, in which NO₂ is positively generated by the oxidation catalyst 31a in a state where the target value Et of the EGR rate E in the EGR control remains to be the first EGR rate or in a state where it is lower than the first EGR rate, and third EGR control to perform regeneration control of the DPF 31b is performed in order to burn PM collected in the DPF 31b on the downstream side (a subsequent stage) . The third EGR control is performed for a preliminarily set control time, and subsequently, the process returns to step S16.

Thereby, in the idling operation state after travel of the vehicle, in a case where the catalyst temperature Tc of the oxidation catalyst 31a falls within the oxidation catalyst activation temperature region Ra, and where regeneration treatment of the DPF 31b needs to be performed, NOx emission can be maintained or increased, and the NO₂ generation amount by the oxidation catalyst 31a can be maintained or increased. PM deposited on the DPF 31b can be burned and reduced by utilizing the NO₂ for regeneration treatment of the DPF 31b on the downstream side (the subsequent stage), and additionally, NO₂ can also be reduced by reduction of NO₂.

If in the determination of step S16, the catalyst index temperature T becomes lower than the first set temperature T1 (NO), the process proceeds to step S14, and it is determined again whether or not the catalyst index temperature T is not less than the lower limit set temperature Ta. If the catalyst index temperature T is not less than the lower limit set temperature Ta (YES), in step S15, the second EGR control is performed in which the target value Et of the EGR rate E in the EGR control is set to be the second EGR rate E2 higher than the first EGR rate E1 at the time of normal operation of the engine 10. The second EGR control is performed for a preliminarily set control time, and then, the process returns to step S14. If the catalyst index temperature T is lower than the lower limit set temperature Ta in step S14 (NO), the process proceeds to step S18.

Thereby, if the catalyst index temperature T becomes lower than the first set temperature T1 (NO), the amount of NOx generated in the cylinder can be decreased to suppress the generation amount of NO₂ by the oxidation catalyst 31a by controlling the target value Et of the EGR rate E in the EGR control to be the second EGR rate E2, and thus emission of NO₂ to the atmosphere can be suppressed.

Additionally, if in the determination of step S14, the catalyst index temperature T becomes lower than the lower limit set temperature Ta (NO), in step S18, fourth EGR control to return the target value Et of the EGR rate E to the first EGR rate E1 is performed. If the catalyst index temperature T is lowered to be a value less than the lower limit set temperature Ta, an NO₂ generation capacity by the oxidation catalyst 31a is also lowered, and thus the target value Et of the EGR rate E is returned to the usual first EGR rate E1. This is because when the EGR amount remains to be increased, an oxidation activation capacity for HC and CO by the oxidation catalyst 31a is also lowered in a case where the catalyst index temperature T is lower than the lower limit set temperature Ta, therefore, emission of HC and CO is increased, and thus the EGR amount needs to be returned as a measure for the increase.

The fourth EGR control is performed for a preliminarily set control time, and subsequently, the process returns to step S11 and repeats steps S11 to S18.

Thereby, further, in a case where the catalyst index temperature T becomes lower than the lower limit set temperature Ta, the first EGR rate E1 in the normal operation is set to be the target Et of the EGR rate E and the EGR control is performed, whereby an amount of EGR gas in the cylinder is returned to an amount in the normal operation, increase in generation amounts of HC and CO in the cylinder can be suppressed, and deterioration of HC and CO can be prevented.

Note that in the case of using the three-way catalyst for the oxidation catalyst 31a, when the target value Et of the EGR rate E in the EGR control is controlled to be the second EGR rate E2, the second EGR rate E2 is set to be a value at which the air-fuel ratio state of the exhaust gas G becomes the stoichiometric state. The second EGR rate E2 at this time is usually a value not less than 50%. Thereby, since purification performance to NOx, HC, and CO can be enhanced by a three-way function of the three-way catalyst, simultaneous reduction of NOx, HC, and CO can be achieved.

According to the exhaust gas purification method of the internal combustion engine in accordance with the above-described control flow, in the exhaust gas purification method for purifying the exhaust gas Go by the exhaust gas after-treatment device 31 that is provided in the exhaust passage 15 of the engine 10 including the EGR system 20, and includes the oxidation catalyst 31a and the DPF 31b in order from the upstream side, the target value Et of the EGR rate E in the EGR control can be set to be the second EGR rate E2 higher than the first EGR rate E1 at the time of normal operation of the engine 10 and the EGR control can be performed, in a case where the catalyst index temperature T that indexes the temperature Tc of the oxidation catalyst 31a falls within the set temperature region R between the lower limit set temperature Ta and the upper limit set temperature Tb which are preliminarily set in relation to the oxidation catalyst activation temperature Tca, and where the estimated PM deposition amount V of the DPF 31b is less than the preliminarily set regeneration start threshold value Vc, after the operation state of the engine 10 transitions from the traveling operation state to the idling operation state.

In addition, regeneration control of the DPF 31b is performed in the state where the target value Et of the EGR rate E in the EGR control remains to be the first EGR rate E1 or in the state where it is lower than the first EGR rate E1, in the case where the catalyst index temperature T that indexes the temperature Tc of the oxidation catalyst 31a is not less than the preliminarily set first set temperature T1, and where the estimated PM deposition amount V of the DPF 31b is not less than the regeneration start threshold value Vc, after the operation state of the engine 10 transitions from the traveling operation state to the idling operation state, and after that, the target value Et of the EGR rate E in the EGR control can be set to be higher than the first EGR rate E1 and regeneration control of the DPF 31b can be performed, in the case where the catalyst index temperature T becomes lower than the preliminarily set first set temperature T1.

Further, in the case where the catalyst index temperature T that indexes the temperature Tc of the oxidation catalyst 31a becomes lower than the lower limit set temperature Ta, after the operation state of the engine 10 transitions from the traveling operation state to the idling operation state, control to return the target value Et of the EGR rate E in the EGR control to the first EGR rate E1 can be performed.

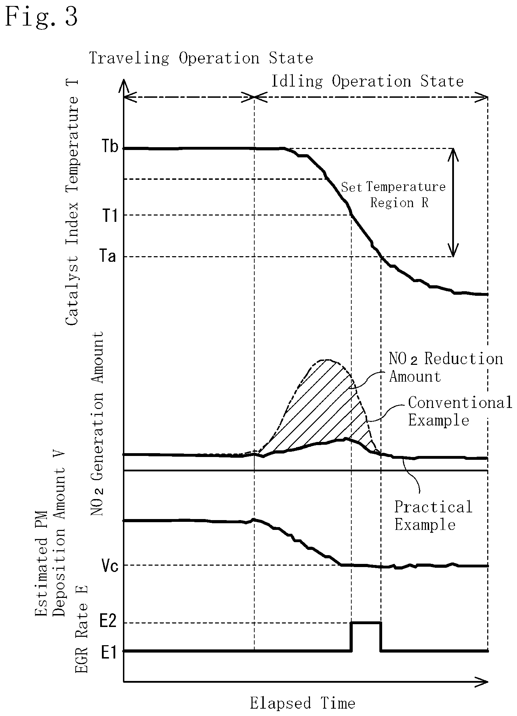

Next, one example of effects of the present invention will be explained with reference to Fig. 3. Fig. 3 is a graph showing transition of an NO₂ generation amount of the oxidation catalyst 31a, in a case where the EGR rate E is controlled based on the catalyst index temperature T (here, it is set to be the same as the catalyst temperature Tc) and the estimated PM deposition amount V of the DPF 31b, in the idling operation state after the traveling operation state. Note that in Fig. 3, the set temperature region R (= the oxidation catalyst activation temperature region Ra) is set to be 200 to 500°C (the lower limit set temperature Ta = 200°C, the upper limit set temperature Tb = 500°C), the first set temperature T1 (it is related to the regeneration treatable temperature) is 300°C, the first EGR rate E1 is 20%, and the second EGR rate E2 is 0%, respectively.

As shown in Fig. 3, in the idling operation state after the traveling operation state, when the estimated PM deposition amount V of the DPF 31b is not less than the regeneration start threshold value Vc, in a case where the catalyst index temperature T is not less than the first set temperature T1 and not more than the upper limit set temperature Tb, and where the catalyst index temperature T falls within the temperature set region R, i.e., the catalyst temperature Tc falls within the oxidation catalyst activation temperature region Ra, the target value Et of the EGR rate E is controlled to be the first EGR rate E1 same as the EGR rate E in the normal traveling operation state of the engine 10, whereby PM deposited on the DPF 31b can be burned, and PM can be reduced. Accordingly, NO₂ can also be reduced by reduction of NO₂ due to PM combustion in Fig. 3, compared with an NO₂ generation amount according to a conventional technology shown in Fig. 4.

In addition, as shown in Fig. 3, in the idling operation state after the traveling operation state, in a case where the catalyst index temperature T is not less than the lower limit set temperature Ta and less than the first set temperature T1 although falling within the temperature set region R, the estimated PM deposition amount V of the DPF 31b is less than the regeneration start threshold value Vc. Therefore, since NOx emission contained in the exhaust gas G can be suppressed by controlling the target value Et of the EGR rate E to be the second EGR rate E2 higher than the first EGR rate E1 in the normal traveling operation state, the NO₂ generation amount by the oxidation catalyst 31a can be suppressed, compared with the NO₂ generation amount according to the conventional technology shown in Fig. 4.

Note that in a case, which is not shown, where the catalyst index temperature T is less than the lower limit set temperature Ta in the idling operation state after the traveling operation state, increase in an HC amount and a CO amount contained in the exhaust gas G can be suppressed by controlling the target value Et of the EGR rate E to be the first EGR rate E1 same as the EGR rate E in the traveling operation state.

According to the exhaust gas purification system 30 of the internal combustion engine and the exhaust gas purification method of the internal combustion engine as configured above, in the idling operation state after travel of the vehicle having the engine 10 mounted therein, in the case where the catalyst temperature Tc of the oxidation catalyst 31a falls within the oxidation catalyst activation temperature region Ra in which the NO₂ generation amount is increased, and regeneration treatment of the DPF 31b need not be performed, and where the probability that the outflow of NO₂ into the atmosphere becomes high, the amount of NOx generated in the cylinder can be decreased by operation with the second EGR rate E2 higher than the first EGR rate E1 in the normal operation state, and thus the generation amount of NO₂ in the oxidation catalyst 31a can be suppressed to prevent emission of NO₂ to the atmosphere. In addition, according to this configuration, since it is unnecessary to separately install a NOx reduction catalyst (a deNOx catalyst) etc., cost can be suppressed.

Note that although the amounts of HC and CO contained in the exhaust gas G emitted from the cylinder are increased by setting high the target value Et of the EGR rate E, the temperature Tc of the oxidation catalyst 31a falls within the oxidation catalyst activation temperature region Ra, and falls within the temperature region in which purification treatment of HC and CO can be performed, and thus emission of HC and CO into the atmosphere can be suppressed.

In addition, in the idling operation state after travel of the vehicle, in the case where the catalyst temperature Tc of the oxidation catalyst 31a falls within the oxidation catalyst activation temperature region Ra, and where regeneration treatment of the DPF 31b needs to be performed, NOx emission can be maintained or increased, and the NO₂ generation amount by the oxidation catalyst 31a can be maintained or increased. PM deposited on the DPF 31b can be burned and reduced by utilizing the NO₂ for regeneration treatment of the DPF 31b on the downstream side (the subsequent stage), and additionally, NO₂ can also be reduced by reduction of NO₂.

In addition, in the case where the catalyst index temperature T becomes lower than the first set temperature T1, the amount of NOx generated in the cylinder can be decreased to suppress the generation amount of NO₂ by the oxidation catalyst 31a by controlling the target value Et of the EGR rate E to be the second EGR rate E2, and thus emission of NO₂ to the atmosphere can be suppressed.

Further, in the case where the catalyst index temperature T becomes lower than the lower limit set temperature Ta after transition from the traveling operation state to the idling operation state, EGR control is performed with the aim of the first EGR rate E1 in the normal operation, whereby the amount of the EGR gas in the cylinder is returned to the amount in the normal operation, increase in the generation amounts of HC and CO in the cylinder can be suppressed, and deterioration of HC and CO can be prevented.

In addition, when the target value Et of the EGR rate E in the EGR control is controlled to be the second EGR rate E2 in the case of using the three-way catalyst for the oxidation catalyst 31a, control to set the second EGR rate E2 to be the value at which the air-fuel ratio state of the exhaust gas becomes the stoichiometric state is performed, thus, purification performance to NOx, HC, and CO can be enhanced by the three-way function of the three-way catalyst, and simultaneous reduction of NOx, HC, and CO can be achieved.

Accordingly, according to the exhaust gas purification system 30 of the internal combustion engine and the exhaust gas purification method of the internal combustion engine as configured above, in the idling operation state after travel of the vehicle, generation of NO₂ by the oxidation catalyst 31a included in the exhaust gas after-treatment device 31 of the exhaust passage 15 can be decreased, and emission of NO₂ to the atmosphere can be suppressed.

### EXPLANATION OF REFERENCE NUMERALS

10 ENGINE (INTERNAL COMBUSTION ENGINE)
15 EXHAUST PASSAGE
20 EGR SYSTEM
21 EGR PASSAGE
22 EGR COOLER
23 EGR VALVE
30 EXHAUST GAS PURIFICATION SYSTEM
31 EXHAUST GAS AFTER-TREATMENT DEVICE
31a OXIDATION CATALYST (DOC)
31b DPF
32, 33, and 34 TEMPERATURE SENSOR
35 DIFFERENTIAL PRESSURE SENSOR
40 WHOLE SYSTEM CONTROL DEVICE
41 CONTROL DEVICE
A FRESH AIR
E EGR RATE
E1 FIRST EGR RATE
E2 SECOND EGR RATE
Et TARGET VALUE OF EGR RATE
G EXHAUST GAS
Go EXHAUST GAS THAT PASSES THROUGH EXHAUST GAS AFTER-TREATMENT DEVICE
Gc PURIFICATION-TREATED EXHAUST GAS
Ge EGR GAS
R SET TEMPERATURE REGION
Ra OXIDATION CATALYST ACTIVATION TEMPERATURE REGION
T CATALYST INDEX TEMPERATURE
T1 FIRST SET TEMPERATURE
Ta LOWER LIMIT SET TEMPERATURE
Tb UPPER LIMIT SET TEMPERATURE
Tc CATALYST TEMPERATURE
Tca OXIDATION CATALYST ACTIVATION TEMPERATURE
Tm MEASUREMENT TEMPERATURE OF OXIDATION CATALYST
Tg TEMPERATURE OF EXHAUST GAS
V ESTIMATED PM DEPOSITION AMOUNT
Vc REGENERATION START THRESHOLD VALUE

## Claims

1. An exhaust gas purification system of an internal combustion engine, in which an exhaust gas after-treatment device including an oxidation catalyst and a DPF in order from an upstream side is provided in an exhaust passage of the internal combustion engine including an EGR system, **characterized in that**
a control device that controls the EGR system is configured to set a target value of an EGR rate in EGR control to be a second EGR rate higher than a first EGR rate at the time of a normal operation of the internal combustion engine and perform the EGR control, in a case where a catalyst index temperature that indexes a temperature of the oxidation catalyst falls within a set temperature region between a lower limit set temperature and an upper limit set temperature which are preliminarily set in relation to an oxidation catalyst activation temperature, and where an estimated PM deposition amount of the DPF is less than a preliminarily set regeneration start threshold value, after an operation state of the internal combustion engine transitions from a traveling operation state to an idling operation state.

2. The exhaust gas purification system of the internal combustion engine according to claim 1, **characterized in that**
the control device that controls the EGR system is configured to:
perform regeneration control of the DPF in a state where the target value of the EGR rate in the EGR control remains to be the first EGR rate or in a state where it is lower than the first EGR rate, in a case where the catalyst index temperature that indexes the temperature of the oxidation catalyst is not less than a preliminarily set first set temperature, and the estimated PM deposition amount of the DPF is not less than the regeneration start threshold value, after the operation state of the internal combustion engine transitions from the traveling operation state to the idling operation state; and
after that, set the target value of the EGR rate in the EGR control to be higher than the first EGR rate and perform regeneration control of the DPF, in a case where the catalyst index temperature becomes lower than the preliminarily set first set temperature.

3. The exhaust gas purification system of the internal combustion engine according to claim 1 or 2, **characterized in that**
the control device is configured to perform control to return the target value of the EGR rate in the EGR control to the first EGR rate, in a case where the catalyst index temperature that indexes the temperature of the oxidation catalyst becomes lower than the lower limit set temperature, after the operation state of the internal combustion engine transitions from the traveling operation state to the idling operation state.

4. The exhaust gas purification system of the internal combustion engine according to any one of claims 1 to 3, **characterized in that**
in a case where a three-way catalyst is used for the oxidation catalyst,
the control device is configured to perform control to set the second EGR rate to be a value at which an air-fuel ratio state of exhaust gas becomes a stoichiometric state, when controlling the target value of the EGR rate in the EGR control to be the second EGR rate.

5. An exhaust gas purification method of an internal combustion engine for purifying exhaust gas by an exhaust gas after-treatment device that is provided in an exhaust passage of the internal combustion engine including an EGR system, and includes an oxidation catalyst and a DPF in order from an upstream side, the method comprising the step of
setting a target value of an EGR rate in EGR control to be a second EGR rate higher than a first EGR rate at the time of a normal operation of the internal combustion engine and performing the EGR control,
in a case where a catalyst index temperature that indexes a temperature of the oxidation catalyst falls within a set temperature region between a lower limit set temperature and an upper limit set temperature which are preliminarily set in relation to an oxidation catalyst activation temperature, and where an estimated PM deposition amount of the DPF is less than a preliminarily set regeneration start threshold value, after an operation state of the internal combustion engine transitions from a traveling operation state to an idling operation state.

6. The exhaust gas purification method of the internal combustion engine according to claim 5, the method further comprising the steps of:
performing regeneration control of the DPF in a state where the target value of the EGR rate in the EGR control remains to be the first EGR rate or in a state where it is lower than the first EGR rate, in a case where the catalyst index temperature that indexes the temperature of the oxidation catalyst is not less than a preliminarily set first set temperature, and the estimated PM deposition amount of the DPF is not less than the regeneration start threshold value, after the operation state of the internal combustion engine transitions from the traveling operation state to the idling operation state; and
after that, setting the target value of the EGR rate in the EGR control to be higher than the first EGR rate and performing regeneration control of the DPF, in a case where the catalyst index temperature becomes lower than the preliminarily set first set temperature.

7. The exhaust gas purification method of the internal combustion engine according to claim 5 or 6, the method further comprising the step of
performing control to return the target value of the EGR rate in the EGR control to the first EGR rate,
in a case where the catalyst index temperature that indexes the temperature of the oxidation catalyst becomes lower than the lower limit set temperature, after the operation state of the internal combustion engine transitions from the traveling operation state to the idling operation state.

8. The exhaust gas purification method of the internal combustion engine according to any one of claims 5 to 7, the method further comprising the step of
performing control to set the second EGR rate to be a value at which an air-fuel ratio state of exhaust gas becomes a stoichiometric state, when controlling the target value of the EGR rate in the EGR control to be the second EGR rate, in a case where a three-way catalyst is used for the oxidation catalyst.

## Patentansprüche

1. Abgasreinigungssystem eines Verbrennungsmotors, in welchem eine Abgasnachbehandlungsvorrichtung mit einem der Reihe nach von einer stromaufwärts gelegenen Seite angeordneten Oxidationskatalysator und einem DPF in einem Abgaskanal des Verbrennungsmotors mit einem EGR-Systems angeordnet ist, **dadurch gekennzeichnet, dass**
eine Steuervorrichtung, welche das EGR-System steuert, so ausgestaltet ist, dass sie einen Zielwert einer EGR-Rate in der EGR-Kontrolle als eine zweite EGR-Rate zum Zeitpunkt eines Normalbetriebs des Verbrennungsmotors festlegt, der höher ist als eine erste EGR-Rate, und die die EGR-Kontrolle ausführt, wenn eine Katalysatorindextemperatur, welche eine Temperatur des Oxidationskatalysators anzeigt, in einen Temperaturbereich zwischen einer unteren Grenzsollwerttemperatur und einer oberen Grenzsollwerttemperatur fällt, welche vorläufig im Verhältnis zu einer Oxidationskatalysatoraktivierungstemperatur festgelegt werden, und wenn eine geschätzte PM-Ablagerungsmenge des DPF geringer ist als ein vorläufig festgelegter Regenerationsstartschwellenwert, nachdem ein Betriebszustand des Verbrennungsmotors von einem Fahrzustand in einen Leerlaufzustand wechselt.

2. Abgasreinigungssystem des Verbrennungsmotors nach Anspruch 1, **dadurch gekennzeichnet, dass**
die Steuervorrichtung, welche das EGR-System steuert, ausgestaltet ist, um:
die Regenerationskontrolle des DPF in einem Zustand auszuführen, in dem der Zielwert der EGR-Rate in der EGR-Kontrolle die erste EGR-Rate bleibt oder in einem Zustand, in dem der Zielwert der EGR-Rate geringer als die erste EGR-Rate ist, wenn die Katalysatorindextemperatur, welche die Temperatur des Oxidationskatalysators anzeigt, nicht niedriger als eine vorläufig festgelegte erste Sollwerttemperatur ist, und die geschätzte PM-Ablagerungsmenge des DPF nicht geringer ist als der Regenerationsstartschwellenwert, nachdem der Betriebszustand des Verbrennungsmotors von dem Fahrzustand in den Leerlaufzustand wechselt, und
danach den Zielwert der EGR-Rate in der EGR-Kontrolle höher als die erste EGR-Rate festzulegen und die Regenerationskontrolle des DPF auszuführen, wenn die Katalysatorindextemperatur niedriger als die vorläufig festgelegte erste Sollwerttemperatur wird.

3. Abgasreinigungssystem des Verbrennungsmotors nach Anspruch 1 oder 2, **dadurch gekennzeichnet, dass**
die Steuervorrichtung ausgestaltet ist, um eine Steuerung auszuführen, um den Zielwert der EGR-Rate in der EGR-Kontrolle auf die erste EGR-Rate zurückzuführen, wenn die Katalysatorindextemperatur, welche die Temperatur des Oxidationskatalysators anzeigt, niedriger ist als die untere Grenzsollwerttemperatur, nachdem der Betriebszustand des Verbrennungsmotors von dem Fahrzustand in den Leerlaufzustand wechselt.

4. Abgasreinigungssystem des Verbrennungsmotors nach einem der Ansprüche 1 bis 3, **dadurch gekennzeichnet, dass**
in einem Fall, wenn ein Drei-Wege-Katalysator als Oxidationskatalysator verwendet wird,
die Steuervorrichtung ausgestaltet ist, um eine Steuerung auszuführen, um die zweite EGR-Rate auf einen Wert festzusetzen, bei dem ein Zustand des Luft-Kraftstoff-Verhältnisses des Abgases ein stöchiometrischer Zustand wird, wenn der Zielwert der EGR-Rate in der EGR-Kontrolle so gesteuert wird, dass er die zweite EGR-Rate ist.

5. Abgasreinigungsverfahren eines Verbrennungsmotors zum Reinigen von Abgas durch eine Abgasnachbehandlungsvorrichtung, welche in einem Abgaskanal des Verbrennungsmotors einschließlich eines EGR-Systems angeordnet ist, und welche einen Oxidationskatalysator und einen DPF der Reihe nach von einer stromaufwärts gelegenen Seite aufweist, wobei das Verfahren den Schritt aufweist
Festlegen eines Zielwerts einer EGR-Rate in der EGR-Kontrolle, so dass eine zweite EGR-Rate zum Zeitpunkt eines Normalbetriebs des Verbrennungsmotors höher ist als eine erste EGR-Rate und Ausführen der EGR-Kontrolle,
wenn eine Katalysatorindextemperatur, welche eine Temperatur des Oxidationskatalysators anzeigt, in einen festgelegten Temperaturbereich zwischen einer unteren Grenzsollwerttemperatur und einer oberen Grenzsollwerttemperatur fällt, welche vorläufig im Verhältnis zu einer Oxidationskatalysatoraktivierungstemperatur festgelegt werden, und wenn eine geschätzte PM-Ablagerungsmenge des DPF geringer ist als ein vorläufig festgelegter Regenerationsstartschwellenwert, nachdem ein Betriebszustand des Verbrennungsmotors von einem Fahrzustand in einen Leerlaufzustand wechselt.

6. Abgasreinigungsverfahren des Verbrennungsmotors nach Anspruch 5, wobei das Verfahren weiterhin die Schritte aufweist:
Ausführen der Regenerationskontrolle des DPF in einem Zustand, in dem der Zielwert der EGR-Rate in der EGR-Kontrolle die erste EGR-Rate bleibt oder in einem Zustand, in dem er niedriger ist als die erste EGR-Rate, wenn die Katalysatorindextemperatur, welche die Temperatur des Oxidationskatalysators anzeigt, nicht niedriger als eine vorläufig festgelegte erste Sollwerttemperatur ist, und die geschätzte PM-Ablagerungsmenge des DPF nicht geringer ist als der Regenerationsstartschwellenwert, nachdem der Betriebszustand des Verbrennungsmotors von dem Fahrzustand in den Leerlaufzustand wechselt, und
danach Festlegen des Zielwerts der EGR-Rate in der EGR-Kontrolle höher als die erste EGR-Rate und Ausführen der Regenerationskontrolle des DPF, wenn die Katalysatorindextemperatur niedriger als die vorläufig festgelegte erste Sollwerttemperatur wird.

7. Abgasreinigungsverfahren des Verbrennungsmotors nach Anspruch 5 oder 6, wobei das Verfahren weiterhin den Schritt aufweist
Ausführen einer Steuerung, um den Zielwert der EGR-Rate in der EGR-Kontrolle auf die erste EGR-Rate zurückzuführen,
wenn die Katalysatorindextemperatur, welche die Temperatur des Oxidationskatalysators anzeigt, niedriger ist als die untere Grenzsollwerttemperatur, nachdem der Betriebszustand des Verbrennungsmotors von dem Fahrzustand in den Leerlaufzustand wechselt.

8. Abgasreinigungsverfahren des Verbrennungsmotors nach einem der Ansprüche 5 bis 7, wobei das Verfahren weiterhin den Schritt aufweist
Ausführen einer Steuerung, um die zweite EGR-Rate auf einen Wert festzulegen, bei dem ein Zustand des Luft-Kraftstoff-Verhältnisses des Abgases ein stöchiometrischer Zustand wird, wenn der Zielwert der EGR-Rate in der EGR-Kontrolle so gesteuert wird, dass er die zweite EGR-Rate ist, wenn ein Drei-Wege-Katalysator als Oxidationskatalysator verwendet wird.

## Revendications

1. Un système de purification de gaz d'échappement d'un moteur à combustion interne, dans lequel un dispositif de post-traitement de gaz d'échappement incluant un catalyseur d'oxydation et un FAP en ordre depuis un côté amont est fourni dans un conduit d'échappement du moteur à combustion interne incluant un système RGE, **caractérisé en ce que**
un dispositif de contrôle qui contrôle le système RGE est configuré afin de définir une valeur cible d'un taux RGE dans le contrôle RGE afin d'être un deuxième taux RGE supérieur à un premier taux RGE au moment d'un fonctionnement normal du moteur à combustion interne et de réaliser le contrôle RGE, dans un cas où une température index de catalyseur qui indexe une température du catalyseur d'oxydation tombe au sein d'une région de température définie entre une température inférieure limite définie et une température supérieure limite définie qui sont définies de manière préliminaire en rapport à une température d'activation de catalyseur d'oxydation, et où une quantité de dépôt de MP estimée du FAP est inférieure à une valeur seuil de début de régénération définie de manière préliminaire, après qu'un état de fonctionnement du moteur à combustion interne a effectué une transition d'un état de fonctionnement en déplacement à un état de fonctionnement au ralenti.

2. Le système de purification de gaz d'échappement du moteur à combustion interne selon la revendication 1, **caractérisé en ce que**
le dispositif de contrôle qui contrôle le système RGE est configuré afin :
de réaliser le contrôle de régénération du FAP dans un état où la valeur cible du taux RGE dans le contrôle RGE demeure être le premier taux RGE ou dans un état où elle est inférieure au premier taux RGE, dans un cas où la température index de catalyseur qui indexe la température du catalyseur d'oxydation n'est pas inférieure à une première température définie, définie de manière préliminaire, et la quantité de dépôt de MP estimée du FAP n'est pas inférieure à la valeur seuil de début de régénération, après que l'état de fonctionnement du moteur à combustion interne a effectué une transition de l'état de fonctionnement en déplacement à l'état de fonctionnement au ralenti ; et
après cela, de définir la valeur cible du taux RGE dans le contrôle RGE afin d'être supérieure au premier taux RGE et de réaliser le contrôle de régénération du FAP, dans un cas où la température index de catalyseur devient inférieure à la première température définie, définie de manière préliminaire.

3. Le système de purification de gaz d'échappement du moteur à combustion interne selon la revendication 1 ou la revendication 2, **caractérisé en ce que**
le dispositif de contrôle est configuré afin de réaliser le contrôle pour faire revenir la valeur cible du taux RGE dans le contrôle RGE au premier taux RGE, dans un cas où la température index de catalyseur qui indexe la température du catalyseur d'oxydation devient inférieure à la température inférieure limite définie, après que l'état de fonctionnement du moteur à combustion interne a effectué une transition de l'état de fonctionnement en déplacement à l'état de fonctionnement au ralenti.

4. Le système de purification de gaz d'échappement du moteur à combustion interne selon l'une quelconque des revendications 1 à 3, **caractérisé en ce que**
dans un cas où un catalyseur à trois voies est utilisé pour le catalyseur d'oxydation,
le dispositif de contrôle est configuré afin de réaliser le contrôle pour définir le deuxième taux RGE afin d'être une valeur à laquelle un état de rapport air/carburant du gaz d'échappement devient un état stoechiométrique, lors du contrôle de la valeur cible du taux RGE dans le contrôle RGE afin d'être le deuxième taux RGE.

5. Une méthode de purification de gaz d'échappement d'un moteur à combustion interne pour purifier du gaz d'échappement grâce à un dispositif de post-traitement de gaz d'échappement qui est fourni dans un conduit d'échappement du moteur à combustion interne incluant un système RGE, et inclut un catalyseur d'oxydation et un FAP en ordre depuis un côté amont, la méthode comprenant l'étape consistant
à définir une valeur cible d'un taux RGE dans le contrôle RGE afin d'être un deuxième taux RGE supérieur à un premier taux RGE au moment d'un fonctionnement normal du moteur à combustion interne et à réaliser le contrôle RGE,
dans un cas où une température index de catalyseur qui indexe une température du catalyseur d'oxydation tombe au sein d'une région de température définie entre une température inférieure limite définie et une température supérieure limite définie qui sont définies de manière préliminaire en rapport à une température d'activation de catalyseur d'oxydation, et où une quantité de dépôt de MP estimée du FAP est inférieure à une valeur seuil de début de régénération définie de manière préliminaire, après qu'un état de fonctionnement du moteur à combustion interne a effectué une transition d'un état de fonctionnement en déplacement à un état de fonctionnement au ralenti.

6. La méthode de purification de gaz d'échappement du moteur à combustion interne selon la revendication 5, la méthode comprenant en sus les étapes consistant :
à réaliser le contrôle de régénération du FAP dans un état où la valeur cible du taux RGE dans le contrôle RGE demeure être le premier taux RGE ou dans un état où elle est inférieure au premier taux RGE, dans un cas où la température index de catalyseur qui indexe la température du catalyseur d'oxydation n'est pas inférieure à une première température définie, définie de manière préliminaire, et la quantité de dépôt de MP estimée du FAP n'est pas inférieure à la valeur seuil de début de régénération, après que l'état de fonctionnement du moteur à combustion interne a effectué une transition de l'état de fonctionnement en déplacement à l'état de fonctionnement au ralenti ; et
après cela, à définir la valeur cible du taux RGE dans le contrôle RGE afin d'être supérieure au premier taux RGE et à réaliser le contrôle de régénération du FAP, dans un cas où la température index de catalyseur devient inférieure à la première température définie, définie de manière préliminaire.

7. La méthode de purification de gaz d'échappement du moteur à combustion interne selon la revendication 5 ou la revendication 6, la méthode comprenant en sus l'étape consistant
à réaliser le contrôle pour faire revenir la valeur cible du taux RGE dans le contrôle RGE au premier taux RGE,
dans un cas où la température index de catalyseur qui indexe la température du catalyseur d'oxydation devient inférieure à la température inférieure limite définie, après que l'état de fonctionnement du moteur à combustion interne a effectué une transition de l'état de fonctionnement en déplacement à l'état de fonctionnement au ralenti.

8. La méthode de purification de gaz d'échappement du moteur à combustion interne selon l'une quelconque des revendications 5 à 7, la méthode comprenant en sus l'étape consistant
à réaliser le contrôle pour définir le deuxième taux RGE afin d'être une valeur à laquelle un état de rapport air/carburant du gaz d'échappement devient un état stoechiométrique, lors du contrôle de la valeur cible du taux RGE dans le contrôle RGE afin d'être le deuxième taux RGE, dans un cas où un catalyseur à trois voies est utilisé pour le catalyseur d'oxydation.
